# EUROPEAN PATENT APPLICATION

(11) **EP 2 889 399 A1**
(43) Date of publication of application: **01.07.2015**
(21) Application number: 13199518.5
(22) Date of filing: 24.12.2013
(51) Int. Cl.: D01F 1/10, D01F 2/00

(54) **Method for producing a nanocrystalline cellulose (CNC) - reinforced cellulosic fibre or filament**

(71) Applicant: SAPPI Netherlands Services B.V., 6211 AA Maastricht (NL)
(72) Inventor: The designation of the inventor has not yet been filed
(74) Representative: Schmitz, Joseph

(57) **Abstract**

The present invention provides for method for spinning a reinforced cellulosic fibre or filament, comprising the steps of a. at a first point in time, forming a composite spinning solution comprising a first reinforcing particle, a cellulosic base material and a process solvent, and b. at a second point in time, extruding the spinning solution through an orifice into a regeneration fluid such as to form the reinforced cellulosic fibre or filament, wherein the composite spinning solution is formed by dissolving the cellulosic base material in the process solvent and distributively dispersing the first reinforcing particle in the process solvent.

## Description

### TECHNICAL FIELD

The present invention relates to the field of producing reinforced, cellulosic fibres or filaments, and more particularly to those reinforced with cellulose-derived particles or chitin-derived particles.

### PRIOR ART

A great variety of natural materials such as wood, cotton or hemp comprise a high concentration of cellulose, which is a straight-chain polymer of anhydroglucose with β 1-4 glycosidic bonds. Nowadays, cellulose can be used in a great deal of technical applications, and one of the major applications is the use of cellulose in the manufacture of fibres.

Known man-made synthetic cellulose fibres are for example rayon (or viscose) fibre and high-strength fibre such as lyocell (marketed under the name TENCEL). Others include modal/high wet modulus fibre, polynosic fibre, cellulose acetate (diacetate and triacetate), FORTISAN fibre, cuprammonium hydroxide rayon & tyre cord.

The advantages of using cellulose as a base material for the manufacture of fibres include its low cost, wide availability, biodegradability, biocompatibility, low toxicity, dimensional stability, high tensile strength, high hydrophilicity and easiness as to surface derivatization.

In most living organisms, cellulose exists as a complex aggregation of amorphous and crystalline regions, i.e. it exists as a semi-crystalline polymer in which the more crystalline regions are monoclinic with parallel packing of the polysaccharide chains.

The strength of the currently available cellulose fibres is directly influenced by both the crystalline content and the level of molecular orientation. There are currently limits to the degree of orientation and crystalline content that can be achieved through existing process technologies and hence the extent of fibre strength that is possible. It would therefore be highly desirable to design a process that enables the manufacture of cellulose-based fibres having a comparatively higher degree of crystallinity in order to achieve stronger cellulose-based fibres.

The most crystalline form of native cellulose which can be derived from wood, or any other cellulosic base materials of natural origin, is nanocrystalline cellulose (CNC). Using known processes, it can be mechanically isolated and purified from any cellulosic source material, albeit at great energetic cost. This energy cost can be reduced, albeit with a concomitant increase in operational costs, by pre-treatments using one or more of enzymatic, chemical processes and derivitisation stages.

Nanocrystalline cellulose (CNC) has interesting mechanical properties for use in material applications. Its tensile strength is about 10 GPa, similar to that of aluminium. Its stiffness is about 100-220 GPa, comparable with that of KEVLAR and better than that of glass fibre, both of which are used commercially to reinforce plastics, and its strength/weight ratio is 8 times that of stainless steel.

Thus, nanocrystalline cellulose (CNC) has been proposed as a reinforcing material to improve the mechanical properties of various materials such as for example thermosetting resins, starch-based matrixes, soy protein, rubber latex, or poly(lactide)s.

The scientific journal publication by Lucia et al.(Langmuir 2009, 25(22) 13250-13257) discloses a method to produce a core-shell composite fibre, where the fibre is obtained by co-electro-spinning a shell of cellulose solution (exterior) together with a core of aqueous nanocrystalline cellulose (CNC) suspension. The need to spin the fibre in this a priori needlessly complicated set-up derives from the fact that while the dissolution of the bulk cellulose is a prerequisite for spinning, the nanocrystalline cellulose should not dissolve since the reinforcing effect is expected to be highest only when the nanocrystalline cellulose retains a maximum of its original crystallinity. This is why the nanocrystalline cellulose is not just mixed to the bulk cellulose but is instead provided as a separate core of CNC aqueous suspension. However, the method described by Lucia et al. is technically complex since the solvents, concentrations, viscosities, gap voltages and flow rates of the core CNC dispersion and the shell cellulose solutions must be adjusted in order to yield a reinforced filament. Also, in the obtained fibres, the nanocrystalline cellulose is essentially confined to the inner core regions of the filament, presumably reducing the reinforcing effect with respect to a filament in which the nanocrystals are well dispersed throughout the bulk of the fibre.

### SUMMARY OF THE INVENTION

The present invention provides for method for spinning a reinforced cellulosic fibre or filament, comprising the steps of
a. at a first point in time, forming a composite spinning solution comprising a first reinforcing particle, a cellulosic base material and a process solvent, and
b. at a second point in time, extruding the spinning solution through an orifice into a regeneration medium such as to form the reinforced cellulosic fibre or filament, wherein the composite spinning solution is formed by dissolving the cellulosic base material in the process solvent and distributively dispersing the first reinforcing particle in the process solvent.

The present invention further provides for a reinforced cellulosic fibre or filament, obtainable by the method according to the above.

The present invention also provides for a spinning apparatus for producing a reinforced cellulosic fibre or filament, said apparatus comprising
a. a first temperature-controlled mixing compartment for forming a spinning solution by dissolving a cellulosic base material in a process solvent and distributively dispersing a first reinforcing particle in a process solvent,
b. a spinneret or spinning nozzle connected to the first temperature-controlled mixing compartment, for extruding the spinning solution into a temperature-controlled regeneration compartment,
c. a temperature-controlled regeneration compartment comprising a regeneration medium for forming the reinforced cellulosic filament from the extruded spinning solution and
d. an optional orientation zone connected to, or comprised in, the temperature-controlled regeneration zone, comprising a means for drawing the formed reinforced cellulosic filament by a factor between 1 to 20, preferably between 5 to 15 and most preferably between 8 to 14.

Further embodiments of the invention are laid down in the dependent claims.

The method for spinning a reinforced cellulosic fibre or filament according to the present invention comprises a step of at a first point in time, forming a composite spinning solution comprising a first reinforcing particle, a cellulosic base material and a process solvent, wherein the composite spinning solution is formed by dissolving the cellulosic base material in the process solvent and distributively dispersing the first reinforcing particle in the process solvent.

The composite spinning solution comprises a first reinforcing particle, a cellulosic base material and a process solvent.

The composite spinning solution may comprise of from 70 to 99 weight percent, preferably of from 85 to 95 weight percent (w/w) of a suitable process solvent, based on the total weight of the composite spinning solution.

Suitable process solvents for use in the method according to the present invention are solvents capable of at least partially, preferably fully dissolving the cellulosic base material, when heated above their melting point.

This means that a suitable process solvent should preferably be able to disrupt not only the intercrystalline bonds in the cellulosic base material, but also the intracrystalline bonds of the cellulosic base material in order to achieve full dissolution.

Suitable process solvents may be chosen among cuprammonium solutions; amine oxides such as NMMO; ionic liquids such as 1-alkyl-3-methylimidazolium halides, 1-alkyl-3-methylimidazolium thiocyanate, 1-alkyl-3-methylimidazolium carboxylates, 1-alkyl-3-methylimidazolium dialkylphosphates, salts of 1-(hydroxyalkyl)-3-methylimidazolium such as 1-(hydroxyalkyl)-3-methylimidazolium halides, 1-(hydroxyalkyl)-3-methylimidazolium thiocyanates, 1-(hydroxyalkyl)-3-methylimidazolium carboxylates, 1-(hydroxyalkyl)-3-methylimidazolium dialkylphosphates, 1-alkenyl-3-methylimidazolium halides, 1-alkenyl-3-methylimidazolium thiocyanates, 1-alkenyl-3-methylimidazolium carboxylates, 1-alkenyl-3-methylimidazolium dialkylphosphates, tetramethylguanidine carboxylates, alkaline earth thiocyanates; organic halides such as DMA - Li halides, 1,3-dimethylimidazolinone - Li halides; urea - alkali metal hydroxides; cadoxen; cuprammonium hydroxide; copper (II) ethylene diamine; DMSO - tetraalkylammonium fluoride and zinc chloride.

Preferably the suitable process solvent is chosen among salts of 1-(hydroxyalkyl)-3-methylimidazolium or mixtures thereof, and more preferably among salts of 1-(hydroxymethyl)-3-methylimidazolium, 1 -(hydroxyethyl)-3-methylimidazolium , 1-(hydroxypropyl)-3-methylimidazolium or 1-(hydroxbutyl)-3-methylimidazolium or mixtures thereof.

Most preferably the suitable process solvent is chosen among halides of a 1-(2-hydroxyethyl)-3-methylimidazolium.

The composite spinning solution may comprise of from 1 to 30, preferably of from 5 to 15 weight percent (w/w), of a cellulosic base material, based on the total weight of the composite spinning solution.

In the context of the present invention, the term "cellulosic base material" includes, but is not limited to, microcrystalline cellulose (MCC), microbial cellulose, cellulose derived from marine organisms or other invertebrates, cellulose derived from mechanically generated wood pulp or from chemical wood pulp; cellulose derived from man-made cellulose-based materials such as tire cord, viscose, cellulose acetate or triacetate, LYOCELL rayon, modal rayon, mercerized cotton fibre and other cellulose II sources.

The cellulosic base material may further be chemically modified by, but not limited to, carboxylation, oxidation, xanthation, carbamation, sulphation or esterification of the polysaccharide backbone.

The most readily available cellulosic base material is sourced from ground wood fibres, recycled or secondary wood pulp fibres, bleached and unbleached wood fibres. The wood may be from softwoods and hardwoods alike. In addition, other vegetable biomass materials such as bagasse, bamboo, cotton, ramie, jute, bamboo, bagasse, and similar plants may be used as sources of cellulosic material.

The cellulosic base material may be available in the form of a dried cellulose powder, aqueous cellulose suspension or paste, or a solution of readily dissolved cellulosic base material in a process solvent.

Commercially available cellulosic base materials include, for example, AVICEL PH-101, obtainable from the FMC Corporation.

The composite spinning solution may comprise of from 0.01 to 8, preferably of from 0.05 to 2 weight percent (w/w) of a first reinforcing particle, based on the total weight of the composite spinning solution.

The first reinforcing particle may be chosen from native or regenerated cellulose-derived or chitin-derived particles, such as for example nanocellulose, and preferably the reinforcing particles are nanocellulose or nanocrystalline cellulose (CNC) or mixtures thereof. More preferably, the nanocellulose and nanocrystalline cellulose (CNC) suitable for the method according to the present invention is modified by carboxylation, oxidation, sulphation or esterification of the polysaccharide backbone and most preferably is modified by carboxylation or sulphation.

The term "nanocellulose" as used herein also encompasses the (interchangeably used) term "nanofibrillated cellulose" and refers to cellulose particles which are characterized by having an elongated form, having an aspect ratio of at least 2:1, and having an average length in the range of 15-900 nm, preferably in the range of 50-700 nm, more preferably 70-700nm. The average diameter is preferably in the range of 3-200 nm, preferably in the range of 5-100 nm, more preferably in the range of 5-30 nm.

An exemplary method of preparation for nanocellulose is described in international application PCT/EP 2013/064776. The term nanocellulose is also used herein to refer to specific surface modified cellulosic nanoparticles with specific functionalities, including but not limited to, one or more of, sulphation, carboxylation, oxidation, acylation, grafted polymeric moieties, for example, PEG. Methods of producing such surface functionalities are well known to those skilled in the art and can be found in literature, for example, Peng, B. L., Dhar, N., Liu, H. L. and Tam, K. C. (2011).

The first reinforcing particles may be chosen from elongated particles, preferably from particles having an aspect ratio of 2:1 or more.

In addition to the first reinforcing particle, the composite spinning solution may comprise of from 0 to 5, preferably of from 0.01 to 2 weight percent (w/w) of a second reinforcing particle, based on the total weight of the composite spinning solution. Preferably the amount of the second reinforcing particle in the spinning solution is inferior to the amount of first reinforcing particle in the spinning solution.

The second reinforcing particle may be chosen from elongated particles preferably having an aspect ratio of 2:1 or more and may be chosen from inorganic or organic reinforcing particles other than the first reinforcing particle, or mixtures thereof.

The suitable second reinforcing particle may be chosen from wollastonite whiskers, carbon nanotubes, aramid fibre, asbestos fibre, titanium dioxide fibres, glass fibre, lignin nanoparticles, nanographites, graphene, Oxides (eg. ZnO, alumina (Al₂O₃), Fe₃O₄, TiO₂) Fumed oxides (eg silica SiO₂), Nitrides (eg. BN), Silicates - natural & synthetic (eg. CaSiO3 - wollastonite; silic acid eg. magadiite), clays (natural & synthetic phyllosilicates eg. kaolinite, halioysite, talc, smectites (eg. montmorillonite (MT), bentonite, hectorite (laponite - synthetic hectorite), micas (eg. illite), sepiolites & palygorskite (eg. attapulgite, imogolite ), organoclays (organically modified natural & synthetic phyllosilicates eg. modified montmorillonites (MMTs)), hydrated oxides (eg. brucite, gibbsite), layered double hydroxides (eg. Mg₆Al₃.4(OH)18.8(CO₃)1.7H₂O), Zn₆Al₂(OH)16CO₃nH₂O), Oxifluorides, Carbonates, Sulphates (e.g. BaSO₄), Phosphates & Phosphonates (eg. hydroxyapatite; zirconium phosphates, alumino-phosphates), chlorides, metal nanoparticles: Ag, Au, Cu, or mixtures thereof.

In the case where the second reinforcing particle is an organic reinforcing particle, it is preferably chosen from nanographite particles, graphene particles, lignin nanoparticles, or carbon nanotubes, or mixtures thereof.

The first reinforcing particle may be provided singly or in a mixture of first and second reinforcing particles in the form of a dry powder or in the form of a particle suspension in a carrier liquid, a paste or as a neat dry powder, which carrier liquid may be the same as the process solvent or different from the process solvent.

In the case where the first reinforcing particle is nanocellulose or nanocrystalline cellulose (CNC), either in a mixture with the second reinforcing particle or alone, and is provided in the form of a particle suspension in a carrier liquid or paste, suitable carrier liquids are chosen from solvents that on one hand do not dissolve the nanocellulose or nanocrystalline cellulose and on the other hand are miscible and compatible with the process solvent, such as for example salts of 1-(hydroxyalkyl)-3-methylimidazolium or mixtures thereof.

In the case where the first reinforcing particle, either in a mixture with the second reinforcing particle or alone, is provided in the form of a particle suspension in a carrier liquid or paste, suitable carrier liquids may be chosen from liquid solvents such as water; nitriles; in particular C2 to C3 aliphatic nitriles such as acetonitrile and aromatic nitrile such as benzonitrile; alcohols such as aliphatic alcohols such as methanol or ethanol and aromatic alcohols such as benzyl alcohol or phenol; ketones and in particular aliphatic ketones such as dialkylketones and aromatic ketone such as benzophenone; esters in particular aliphatic esters such as ethyl acetate and aromatic esters such as benzyl benzoate; ether in particular aliphatic simple or asymmetrical ethers such as diethyl ether; N,N-dialkylamides such as N,N-dimethylformamide (DMF) and cycloaliphatic analogues thereof; sulphones such as tetramethylene sulfone, dimethyl sulphoxide (DMSO) and cycloaliphatic analogues thereof; ionic liquids such as 1-alkyl-3-methylimidazolium halides, 1-alkyl-3-methylimidazolium thiocyanate, 1-alkyl-3-methylimidazolium carboxylates, 1-alkyl-3-methylimidazolium dialkylphosphates, 1-alkyl-3-methylimidazolium tetrafluoroborates, 1-alkyl-3-methylimidazolium hexafluorophosphates, 1-(hydroxyalkyl)-3 -methylimidazolium halides, 1-(hydroxyalkyl)-3-methylimidazolium thiocyanates, 1-(hydroxyalkyl)-3-methylimidazolium carboxylates, 1-(hydroxyalkyl)-3-methylimidazoilium dialkylphosphates, 1-(hydroxyalkyl)-3-methylimidazolium tetrafluoroborate, 1-(hydroxyalkyl)-3-methylimidazolium hexafluorophosphates, 1-alkenyl-3-methylimidazoilium halides, 1-alkenyl-3-methylimidazoilium thiocyanates, 1-alkenyl-3-methylimidazoilium carboxylates, 1-alkenyl-3-methylimidazoilium dialkylphosphates, 1-alkenyl-3-methylimidazoilium tetrafluoroborates, 1-alkenyl-3-methylimidazoilium hexafluorophosphates, and preferably 1-(2-hydroxyethyl)-3-methylimidazolium acetate or 1-ethyl-3-methylimidazolium acetate; carbonates in particular dialkyl carbonate esters such as diethylcarbonate, and/or mixtures thereof. Preferably, the carrier liquid is chosen among salts of 1-(hydroxyalkyl)-3-methylimidazolium or mixtures thereof, and more preferably among salts of 1-(hydroxymethyl)-3-methylimidazolium, 1 -(hydroxyethyl)-3-methylimidazolium , 1-(hydroxypropyl)-3-methylimidazolium or 1-(hydroxbutyl)-3-methylimidazolium or mixtures thereof. Most preferably the carrier liquid is chosen among halides of a 1-(2-hydroxyethyl)-3-methylimidazolium.

For example, the first reinforcing particle may be nanocellulose or nanocrystalline cellulose (CNC), the carrier liquid and process solvent chosen from salts of 1-(hydroxyalkyl)-3-methylimidazolium or mixtures thereof, and the cellulosic base material any cellulose II allomorph.

The composite spinning solution may be formed by combining predefined amounts of cellulosic base material, process solvent and the reinforcing particles at a temperature above the melting point of the process solvent in a suitable apparatus such as for example a temperature-controlled mixing compartment equipped with a mixing means capable of distributively dispersing the first reinforcing particle in the process solvent.

The composite spinning solution may be formed by combining the individual components in any order to form the composite spinning solution or by preparing a premix of two or more components and subsequently adding the remaining components.

In one embodiment, the cellulosic base material may be dissolved in the process solvent and the first or mixture of first and second reinforcing particle may be distributively dispersed in the process solvent to form the composite spinning solution by first combining a cellulosic base material with a process solvent to form a cellulosic base material solution, and then subsequently dispersing the first or mixture of first and second reinforcing particle in the thus formed cellulosic base material solution, wherein the first or mixture of first and second reinforcing particle may be in the form of a dry powder, paste or suspension in a carrier fluid.

In another embodiment, the cellulosic base material may be dissolved in the process solvent and the first or mixture of first and second reinforcing particle may be distributively dispersed in the process solvent to form the composite spinning solution by first combining a first or mixture of first and second reinforcing particle with a process solvent such as to form a distributively dispersed suspension of reinforcing particle in process solvent and then subsequently adding a cellulosic base material to said suspension, wherein the process solvent is preferably a salt of 1-(hydroxyalkyl)-3-methylimidazolium and the cellulosic base material is preferably in the form of a cellulosic base material powder.

A suitable apparatus for forming the composite spinning solution, i.e for dissolving the cellulosic base material and distributively dispersing the first and/or second reinforcing particle in the process solvent, may be chosen from any apparatus capable of forming a substantially molecularly dispersed solution of the cellulosic base material in the process solvent.

Preferably, the suitable apparatus for forming the composite spinning solution, i.e for dissolving the cellulosic base material and distributively dispersing the first or mixture of first and second reinforcing particle in the process solvent, may be chosen from plough shear or z-blade mixers, kneaders, compounding single or twin screw extruders, DTBs, filmtruders, rotor-stator mixers, roll mills, Haake mixer, static mixers, ULTRA TURRAX mixers, and combinations thereof. Preferably, the composite spinning solution is formed in a temperature-controlled mixing compartment in spinning apparatus.

The method for spinning a reinforced cellulosic fibre or filament according to the present invention comprises a step of at a second point in time, extruding the spinning solution through an orifice into a regeneration medium such as to form the reinforced cellulosic fibre or filament.

Extruding the composite spinning solution through an orifice may be helped by either applying positive pressure to the composite spinning solution upstream of the orifice or by applying negative pressure downstream of the orifice.

The orifice through which the composite spinning solution is extruded into a regeneration medium may be a spinneret having one or a plurality of channels, for example between 25 and 75, of preferably quadriconical profile, and further preferably having channels of an approximate length of 250 microns and exit diameters of approximately 90 microns.

In the case a process solvent which requires heating to liquefy is used, the spinneret may equipped with a heating means such as for example an external oil circulator jacket.

The method for spinning a reinforced cellulosic fibre or filament according to the present invention further requires that the time period between the first and second points in time is chosen such that the first reinforcing particle essentially does not dissolve in the spinning solution.

Therefore, in the case where a process solvent is used that not only dissolves the cellulosic base material, but also nanocellulose or nanocrystalline cellulose (CNC) reinforcement particles, the time period between the first and the second points in time in the method according to the present invention is chosen such that the nanocellulose or nanocrystalline cellulose (CNC) reinforcement particle has no time to dissolve.

The maximum permissible time period required to essentially avoid dissolution of the first reinforcing particle will depend strongly on the chosen process solvent, used to form the composite spinning solution by dissolving the cellulosic base material and distributively dispersing the first reinforcing particle in said process solvent, and can be determined experimentally for a set cellulosic base material solution temperature, volumetric flow rate and carrier liquid(s) selection.

While a certain degree of nanocellulose or nanocrystalline cellulose (CNC) dissolution is possible, full solvation in the composite spinning solution is to be avoided by choosing a sufficiently short time period, since the fibre obtained from spinning such a composite spinning solution with dissolved reinforcing particles will not exhibit the increased mechanical properties shown in the reinforced fibre obtained according to the present invention, when compared to a fibre obtained from a spinning solution comprising cellulosic base material alone.

For this reason, the time period between the first and second points in time is preferably chosen such that it corresponds to the time period needed to achieve full distributive mixing of first and/or second reinforcing particles in the composite spinning solution.

In a preferred embodiment, the process solvent and the carrier liquid (in the case of a suspension or paste) are the same, and most preferably are a salt of 1-(hydroxyalkyl)-3-methylimidazolium or mixtures thereof.

Suitable regeneration media for cellulosic fibres or filament are known to the person skilled in the art and may be in liquid or gaseous form, and may be at a temperature of from 10 to 130°C, preferably between 15 to 60°C and most conveniently at room temperature. From a safety and cost point of view, liquid water is the preferred regeneration medium.

Prior to being extruded through an orifice into a regeneration medium, the composite spinning solution is preferably degassed by submitting the composite spinning solution to reduced pressure, to avoid bubble formation during the spinning process.

The present invention further provides for a reinforced cellulosic fibre or filament, obtainable by the method described above, comprising a cellulosic base material and a first or mixture of first and second reinforcing particle.

The reinforced cellulosic fibre or filament obtainable by the method described above is characterized in that the first or mixture of first and second reinforcing particle is distributively dispersed throughout the cellulosic base material.

The reinforced cellulosic fibre or filament obtainable by the method described above is further characterized in that the linear density of said fibre or filament is in the range of 0.1 to 5, preferably of from 0.3 to 2 dtex.

Stated alternatively, it can be said that the reinforced cellulosic fibre or filament obtainable by the method described above is a monolithic reinforced cellulosic fibre or filament, in opposition to the subdivided structure core-shell fibres or filaments.

Preferably, the reinforced cellulosic fibre or filament according to the present invention comprises of from 80 to 99.9 weight percent of cellulosic base material and of from 0.1 to 20 weight percent of a first or mixture of first and second reinforcing particle, the weight percent being based on the total weight of the filament.

In the case where the reinforced cellulosic fibre or filament according to the present invention comprises a cellulosic base material in combination with a first and a second reinforcing particle, the weight ratio between the first reinforcing particle and the second reinforcing particle may be from 100:1 to 2:1, preferably of from 10:1 to 2:1 or from 4:1 to 2:1.

In the case where the reinforced cellulosic fibre or filament according to the present invention comprises a cellulosic base material in combination with a first reinforcing particle, said first reinforcing particle is preferably chosen from nanocellulose, nanocrystalline cellulose (CNC) or mixtures thereof.

In the case where the reinforced cellulosic fibre or filament according present invention comprises, or consists, a cellulosic base material in combination with a first reinforcing particle, said reinforced cellulosic fibre or filament preferably consists of from 80 to 99.9, preferably between 85 to 98, weight percent of cellulosic base material, in particular of cellulose II allomorph, and of from 0.1 to 20, preferably of from 2 to 15 weight percent of a first reinforcing particle chosen from nanocellulose, nanocrystalline cellulose (CNC) or mixtures thereof, the weight percent being based on the total weight of the filament.

The reinforced cellulosic fibre or filament according present invention may have a diameter of from 3 to 350, preferably of from 3 to 50, and more preferably of from 2 to 25 microns.

The reinforced cellulosic fibre or filament according present invention may have a tenacity of from 15 to 200, preferably of from 30 to 160 cN/tex, when measured according to the International Bureau for the Standardisation of Man-Made Fibres (BISFA) Test method - 'Testing methods viscose, modal, lyocell and acetate staple fibres and tows', 2004 Edition.

The reinforced cellulosic fibre or filament according to the present invention may comprise a cellulosic base material and a first and/or second reinforcement particle in a weight ratio of from of from 5:1 to 500:1.

The present invention also provides for a spinning apparatus for producing a reinforced cellulosic fibre or filament, said apparatus comprising
a. a first temperature-controlled mixing compartment for forming a spinning solution by dissolving a cellulosic base material and distributively dispersing a first reinforcing particle in the process solvent,
b. a spinneret or spinning nozzle connected to the first temperature-controlled mixing compartment, for extruding the spinning solution into a temperature-controlled regeneration compartment,
c. a temperature-controlled regeneration compartment comprising a regeneration medium for forming the reinforced cellulosic filament from the extruded spinning solution and
d. an orientation zone, connected to, or comprised in, the temperature-controlled regeneration zone, comprising a means for drawing the formed reinforced cellulosic filament by a factor of from 1 to 20, preferably between 5 to 15 and most preferably between 8 to 14.

The spinning apparatus for producing a reinforced cellulosic filament further comprises a mixing means of the static mixer type, designed to achieve distributive mixing of the reinforcement particles.

The spinning apparatus for producing a reinforced cellulosic filament further comprises a spinneret or spinning nozzle channels having a tri- or quadriconical profile and/or an exit diameter of from 40 to 250 microns.

In the case the process solvent has a melting point above room temperature, the solvent is heated in the temperature-controlled mixing compartment of the spinning apparatus to a temperature of at least its melting point.

### EXAMPLES

### Example 1

A cellulosic base solution was prepared by dissolving cellulose pulp (130 g, DP 1150, 96% α-cellulose) in 1-ethyl-3-methylimidazolium acetate (EMIMAc, 870 g) by compounding in a Z-blade mixer for 60 minutes at 80 °C, removing any water present under reduced pressure, yielding a visually transparent and homogeneous solution.

A separate reinforcing particle suspension was prepared by suspending a freeze-dried powder of sulphated cellulose nanocrystals prepared from the acid hydrolysis of cellulose pulp (96% α-cellulose) and converted into the ammonium salt form (80.0g) in dimethyl sulphoxide (DMSO; 920.0g). The dry cellulose nanocrystals were added gradually into the vortex created by a rotor-stator mixer (Ultra-Turrax) and the resultant turbid, gel-like suspension mixed for a further 20 mins.

The cellulosic base solution was subsequently degassed and conveyed to a fibre spinning apparatus by means of a co-rotating twin screw extruder (screw diameter 21mm, L/D 25) terminated with a gear pump and filter pack. Each zone of the extruder barrel was maintained at a controlled temperature of 80°C by means of integrated electric heating elements. The spinning apparatus comprised a cylindrical member containing sequentially: a mixing chamber for introduction of a separate reinforcing particle suspension from an injector assembly affixed perpendicular to the main flow direction, a static mixing zone containing a fused array of 10 smxs static mixers, and a final steel mesh filter pack of nominal mesh size 5 microns. The injector assembly was used to meter the previously prepared reinforcing particle suspension into the mixing chamber by means of a high-pressure syringe driver (Cetoni) fitted with a 100 ml stainless steel syringe. The spinning assembly was terminated in a spinneret containing a plurality of channels (50) of quadriconical profile (45°, 30°, 20°, 10°), length 250 microns and exit diameter 90 microns. The temperature of the spinning device was maintained at 80°C by means of an external oil circulator jacket.

Composite reinforced regenerated cellulose fibres were spun by simultaneously metering the cellulosic base solution and reinforcing particle suspension into the mixing chamber of the spinning assembly. The two components were then subjected to effective distributive mixing by passing through the static mixer assembly, prior to extrusion through the spinnerets. The total flow rate through the spinning assembly was controlled to give an extrusion velocity of 8 m/min at the spinneret and the ratio of the volumetric flow rates of cellulose solution and cellulose nanocrystal suspension respectively were fixed at a ratio of 10:1. Spinning was conducted by extrusion through an air gap of 10mm into a coagulation bath containing water maintained at 18 °C. A system of motorized godets was employed to maintain a take up velocity of 72 m/min, giving a draw ratio of 9. The fibre tow was rinsed by conveying through two further water baths maintained at 60 °C, passed through a forced convection drying system and wound onto a spool.

The tenacity of the resultant multi-fibre tow, following conditioning at 65% RH and 25°C for 18 hours, was measured as 140 cN/tex.

### Example 2

A cellulosic base solution was prepared by dissolving cellulose pulp (130 g, DP 1150, 96% α-cellulose) in 1-ethyl-3-methylimidazolium acetate (EMIMAc, 870 g) by compounding in a Z-blade mixer for 60 minutes at 80 °C, removing any water present under reduced pressure, yielding a visually transparent and homogeneous solution.

A separate reinforcing particle suspension was prepared by suspending a freeze-dried powder of carboxylated cellulose nanocrystals prepared from the acid hydrolysis of cellulose pulp (96% α-cellulose) and converted into the ammonium salt form (80.0g) in deionized water (920.0g). The dry cellulose nanocrystals were added gradually into the vortex created by a rotor-stator mixer (Ultra-Turrax) and the resultant turbid, gel-like suspension mixed for a further 20 mins.

The cellulosic base solution was subsequently degassed and conveyed to a fibre spinning apparatus by means of a co-rotating twin screw extruder (screw diameter 21mm, L/D 25) terminated with a gear pump and filter pack. Each zone of the extruder barrel was maintained at a controlled temperature by means of integrated electric heating elements. 75°C. The spinning device comprised a cylindrical member containing sequentially: a mixing chamber for introduction of a separate suspension of reinforcing particles from an injector assembly affixed perpendicular to the main flow direction, a static mixing zone containing a fused array of 10 static mixers, and a final steel mesh filter pack of nominal mesh size 5 microns. The injector assembly was used to meter the previously prepared reinforcing particle suspension into the mixing chamber by means of a high-pressure syringe driver (Cetoni) fitted with a 100 ml stainless steel syringe. The spinning assembly was terminated in a spinneret containing a plurality of channels (50) of quadriconical profile (45°, 30°, 20°, 10°), length 200 microns and exit diameter 90 microns. The temperature of the spinning device was maintained by means of an external oil circulator jacket.

Composite reinforced regenerated cellulose fibres were spun by simultaneously metering the cellulosic base solution and reinforcing particle suspension into the mixing chamber of the spinning assembly. The two components were then subjected to effective distributive mixing by passing through the static mixer assembly, prior to extrusion through the spinnerets. The total flow rate through the spinning assembly was controlled to give an extrusion velocity of 8 m/min at the spinneret and the ratio of the volumetric flow rates of cellulosic base solution and reinforcing particle suspension respectively were fixed at a ratio of 10:1. Spinning was conducted by extrusion through an air gap of 10mm into a coagulation bath containing water maintained at 18 °C. A system of motorized godets was employed to maintain a take up velocity of 72 m/min, giving a draw ratio of 9. The fibre tow was rinsed by conveying through two further water baths maintained at 60 °C, passed through a forced convection drying system and wound onto a spool.

The tenacity of the resultant multi-fibre tow, following conditioning at 65% RH, 25°C for 18 hours, was measured as 118 cN/tex.

### Example 3

A cellulosic base solution was prepared by dissolving cellulose pulp (130 g, DP 1150, 96% α-cellulose) in 1 N-methylmorpholine-N-oxide (NMMO, 81 % (aq) 870 g) by compounding in a Z-blade mixer for 60 minutes at 80 °C, removing sufficient water present under reduced pressure, to yield a visually transparent and homogeneous solution.

A separate reinforcing particle suspension was prepared by suspending a freeze-dried powder of sulphated cellulose nanocrystals prepared from the acid hydrolysis of cellulose pulp (96% α-cellulose) and converted into the ammonium salt form (80.0g) in N-methylpyrolidone (NMP, 920.0g). The dry cellulose nanocrystals were added gradually into the vortex created by a rotor-stator mixer (Ultra-Turrax) and the resultant turbid, gel-like suspension mixed for a further 20 mins.

The cellulosic base solution was subsequently degassed and conveyed to a fibre spinning apparatus by means of a co-rotating twin screw extruder (screw diameter 21mm, L/D 25) terminated with a gear pump and filter pack. Each zone of the extruder barrel was maintained at a controlled temperature by means of integrated electric heating elements. The spinning device comprised a cylindrical member containing sequentially: a mixing chamber for introduction of a separate suspension of reinforcing particles from an injector assembly affixed perpendicular to the main flow direction, a static mixing zone containing a fused array of 10 static mixers, and a final steel mesh filter pack of nominal mesh size 5 microns. The injector assembly was used to meter the previously prepared reinforcing particle suspension into the mixing chamber by means of a high-pressure syringe driver (Cetoni) fitted with a 100 ml stainless steel syringe. The spinning assembly was terminated in a spinneret containing a plurality of channels (50) of quadriconical profile (45°, 30°, 20°, 10°), length 200 microns and exit diameter 90 microns. The temperature of the spinning device was maintained by means of an external oil circulator jacket. Composite reinforced regenerated cellulose fibres were spun by simultaneously metering the cellulosic base solution and reinforcing particle suspension into the mixing chamber of the spinning assembly. The two components were then subjected to effective distributive mixing by passing through the static mixer assembly, prior to extrusion through the spinnerets. The total flow rate through the spinning assembly was controlled to give an extrusion velocity of 8 m/min at the spinneret and the ratio of the volumetric flow rates of cellulosic base solution and reinforcing particle suspension respectively were fixed at a ratio of 10:1. Spinning was conducted by extrusion through an air gap of 10mm into a coagulation bath containing water maintained at 18 °C. A system of motorized godets was employed to maintain a take up velocity of 72 m/min, giving a draw ratio of 9. The fibre tow was rinsed by conveying through two further water baths maintained at 60 °C, passed through a forced convection drying system and wound onto a spool.

The tenacity of the resultant multi-fibre tow, following conditioning at 65% RH, 25°C & 18 hours, was measured as 100 cN/tex.

### Example 4

A cellulosic base solution was prepared by dissolving cellulose pulp (130 g, DP 1150, 96% α-cellulose) in 1-butyl-3-methylimidazolium acetate (BMIMAc, 870 g) charged with fumed silica (2.6 g, Aerosil 200, Evonik Industries) by compounding in a Z-blade mixer for 60 minutes at 80 °C, removing any water present under reduced pressure, yielding a visually transparent and homogeneous solution. The fumed silica particles were first dispersed into BMIMAc using a rotor-stator mixer prior to transferring the solvent into the chamber of the Z-blade mixer.

A separate reinforcing particle suspension was prepared by suspending a freeze-dried powder of sulphated cellulose nanocrystals prepared from the acid hydrolysis of cellulose pulp (96% α-cellulose) and converted into the ammonium salt form (80.0g) in dimethyl sulphoxide (DMSO, 920.0g). The dry cellulose nanocrystals were added gradually into the vortex created by a rotor-stator mixer (Ultra-Turrax) and the resultant turbid, gel-like suspension mixed for a further 20 mins.

The cellulosic base solution was subsequently degassed and conveyed to a fibre spinning apparatus by means of a co-rotating twin screw extruder (screw diameter 21mm, L/D 25) terminated with a gear pump and filter pack. Each zone of the extruder barrel was maintained at a controlled temperature by means of integrated electric heating elements. The spinning device comprised a cylindrical member containing sequentially: a mixing chamber for introduction of a separate suspension of reinforcing particles from an injector assembly affixed perpendicular to the main flow direction, a static mixing zone containing a fused array of 10 static mixers, and a final steel mesh filter pack of nominal mesh size 5 microns. The injector assembly was used to meter the previously prepared reinforcing particle suspension into the mixing chamber by means of a high-pressure syringe driver (Cetoni) fitted with a 100 ml stainless steel syringe. The spinning assembly was terminated in a spinneret containing a plurality of channels (50) of quadriconical profile (45°, 30°, 20°, 10°), length 250 microns and exit diameter 90 microns. The temperature of the spinning device was maintained by means of an external oil circulator jacket.

Composite reinforced regenerated cellulose fibres were spun by simultaneously metering the cellulosic base solution and reinforcing particle suspension into the mixing chamber of the spinning assembly. The two components were then subjected to effective distributive mixing by passing through the static mixer assembly, prior to extrusion through the spinnerets. The total flow rate through the spinning assembly was controlled to give an extrusion velocity of 8 m/min at the spinneret and the ratio of the volumetric flow rates of cellulosic base solution and reinforcing particle suspension respectively were fixed at a ratio of 10:1. Spinning was conducted by extrusion through an air gap of 10mm into a coagulation bath containing water maintained at 18 °C. A system of motorized godets was employed to maintain a take up velocity of 72 m/min, giving a draw ratio of 9. The fibre tow was rinsed by conveying through two further water baths maintained at 60 °C, passed through a forced convection drying system and wound onto a spool.

The tenacity of the resultant multi-fibre tow, following conditioning at 65% RH , 25°C & 18 hours, was measured as 160cN/tex.

### Example 5

A cellulosic base solution was prepared by dissolving cellulose pulp (130 g, DP 1150, 96% α-cellulose) in 1-ethyl-3-methylimidazolium acetate (EMIMAc, 870 g) by compounding in a Z-blade mixer for 60 minutes at 80 °C, removing any water present under reduced pressure, yielding a visually transparent and homogeneous solution.

A separate reinforcing particle suspension was prepared by suspending a freeze-dried powder of sulphated cellulose nanocrystals prepared from the acid hydrolysis of cellulose pulp (96% α-cellulose) and converted into the ammonium salt form (80.0g) in a 70:30 (w/w) water:EMIMAc (920.0g). The dry cellulose nanocrystals were added gradually into the vortex created by a rotor-stator mixer (Ultra-Turrax) and the resultant turbid, gel-like suspension mixed for a further 20 mins.

The cellulosic base solution was subsequently degassed and conveyed to a fibre spinning apparatus by means of a co-rotating twin screw extruder (screw diameter 21mm, L/D 25) terminated with a gear pump and filter pack. Each zone of the extruder barrel was maintained at a controlled temperature by means of integrated electric heating elements. The spinning device comprised a cylindrical member containing sequentially: a mixing chamber for introduction of a separate suspension of reinforcing particles from an injector assembly affixed perpendicular to the main flow direction, a static mixing zone containing a fused array of 10 static mixers, and a final steel mesh filter pack of nominal mesh size 5 microns. The injector assembly was used to meter the previously prepared reinforcing particle suspension into the mixing chamber by means of a high-pressure syringe driver (Cetoni) fitted with a 100 ml stainless steel syringe. The spinning assembly was terminated in a spinneret containing a plurality of channels (50) of quadriconical profile (45°, 30°, 20°, 10°), length 150 microns and exit diameter 90 microns. The temperature of the spinning device was maintained by means of an external oil circulator jacket.

Composite reinforced regenerated cellulose fibres were spun by simultaneously metering the cellulosic base solution and reinforcing particle suspension into the mixing chamber of the spinning assembly. The two components were then subjected to effective distributive mixing by passing through the static mixer assembly, prior to extrusion through the spinnerets. The total flow rate through the spinning assembly was controlled to give an extrusion velocity of 8 m/min at the spinneret and the ratio of the volumetric flow rates of cellulosic base solution and reinforcing particle suspension respectively were fixed at a ratio of 10:1. Spinning was conducted by extrusion through an air gap of 10mm into a coagulation bath containing water maintained at 18 °C. A system of motorized godets was employed to maintain a take up velocity of 72 m/min, giving a draw ratio of 9. The fibre tow was rinsed by conveying through two further water baths maintained at 60 °C, passed through a forced convection drying system and wound onto a spool.

The tenacity of the resultant multi-fibre tow, following conditioning at 65% RH , 25°C & 18 hours, was measured as 120 cN/tex.

### Example 6

First, cellulose pulp (500 g, DP 1150, 96% α-cellulose) was dissolved in a mixture of dimethylsulphoxide (6650 g) and 1-ethyl-3-methylimidazolium acetate (EMIMAc, 2850 g), by compounding in a Z-blade mixer for 60 minutes at 80 °C, removing any water present under reduced pressure, yielding a visually transparent and homogeneous solution. The resultant solution was allowed to cool to 40 °C and then poured into a large excess of water (10 litres), and the obtained mixture was homogenized via means of a vertically mounted rotor-stator mixer. Upon cooling to ambient temperature, the resultant precipitate of regenerated cellulose (Cellulose II allomorph) was collected on a steel filter mesh (250 microns) and washed successively with hot water (2 x 0.5 1) and cold water (2 x 11). The regenerated cellulose was then dried overnight at 85 °C and homogenized into a fine powder in a Waring Blender.

Second, a separate reinforcing particle suspension was prepared by suspending 10g of freeze-dried powder of sulphated cellulose nanocrystals, prepared from the acid hydrolysis of cellulose pulp (92% α-cellulose, DP 860) and converted into the ammonium salt form, in deionized water (390.0g). The dry cellulose nanocrystals were added gradually into the vortex created by a rotor-stator mixer (Ultra-Turrax) and the resultant turbid suspension was mixed for a further 20 mins. To this suspension, 1-(2-hydroxyethyl)-3-methylimidazolium acetate (HEMIMCl, 990 g) in the form of a fine powder was added, in small aliquots, allowing the solid HEMIMCl to dissolve fully between additions and the heat of dissolution to dissipate. The water in the system was then removed under reduced pressure, yielding a turbid, gel-like suspension of cellulose nanocrystals in HEMIMCl.

A composite spinning solution was finally prepared by combining the above reinforcing particle suspension (cellulose nanocrystals in HEMIMCl, 900 g) and the dried, powdered Cellulose II powder (100 g), by compounding in a Z-blade mixer for 60 minutes at 120 °C, removing any water present in the spinning solution under reduced pressure and allowing the Cellulose II powder to dissolve fully. The resultant product was a turbid, pale brown, visually homogeneous dispersion of Cellulose I nanocystals in a continuous phase comprising a solution of cellulose in HEMIMCl.

The composite spinning solution was subsequently degassed and conveyed to a fibre spinning apparatus by means of a co-rotating twin screw extruder (screw diameter 21mm, L/D 25) terminated with a gear pump, filter pack and spinning device. Each zone of the extruder barrel was maintained at a controlled temperature of 120°C by means of integrated electric heating elements. The spinning device was terminated in a spinneret containing a plurality of channels (50) of quadriconical profile (45°, 30°, 20°, 10°), length 200 microns and exit diameter 90 microns. The temperature of the spinning device was maintained at 120°C by means of an external oil circulator jacket. The volumetric flow rate of the composite spinning dope through the spinning device was controlled to give an extrusion velocity of 8 m/min at the spinneret orifice. Spinning was conducted by extrusion through an air gap of 10mm into a coagulation bath containing water maintained at 18 °C. A system of motorized godets was employed to maintain a take up velocity of 72 m/min, giving a draw ratio of 9. The fibre tow was rinsed by conveying through two further water baths maintained at 60 °C, passed through a forced convection drying system and wound onto a spool.

The tenacity of the resultant multi-fibre tow, following conditioning at 65% RH, 25°C for 18 hours, was measured as 132 cN/tex.

### List of reference signs

- 1: temperature-controlled mixing compartment
- 2: spinning solution
- 3: spinneret
- 4: temperature-controlled regeneration compartment
- 5: orientation compartment
- 6: drawing means
- 7: reinforced cellulosic filament
- 8: spool

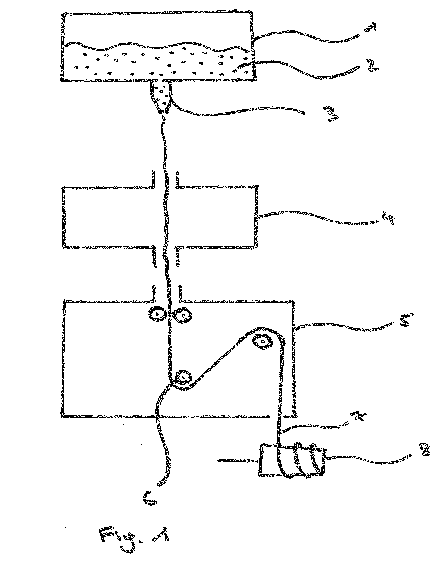

## Claims

1. A method for spinning a reinforced cellulosic fibre or filament, comprising the steps of:
a. at a first point in time, forming a composite spinning solution comprising a first reinforcing particle, a cellulosic base material and a process solvent,
b. at a second point in time, extruding the composite spinning solution through an orifice into a regeneration fluid such as to form the reinforced cellulosic fibre or filament,
wherein the composite spinning solution is formed by dissolving the cellulosic base
material and distributively dispersing the first reinforcing particle in the process solvent.

2. The method of claim 1, wherein the period between the first and second points in time is chosen such that the first reinforcing particle essentially does not dissolve in the spinning solution.

3. The method of claim 1, wherein the first reinforcing particle has an aspect ratio of 2:1 or more.

4. The method according to any one of the preceding claims, wherein the first reinforcing particle is chosen from native or regenerated cellulose-derived particles or chitin-derived particles, and preferably is nanocellulose, nanocrystalline cellulose (CNC) or mixtures thereof.

5. The method according to any one of the preceding claims, wherein the first reinforcing particle is comprised in the composite spinning solution of from 0.01 to 2 weight percent, based on the total weight of the composite spinning solution.

6. The method according to any one of the preceding claims, wherein the composite spinning solution further comprises a second reinforcing particle, chosen from inorganic or organic reinforcing particles other than the first reinforcing particle, or mixtures thereof.

7. The method according to claim 6, wherein the second reinforcing particle has an aspect ratio of 2:1 or more.

8. The method according to claim 7, wherein the second reinforcing particle is chosen from wollastonite whiskers, carbon nanotubes, aramid fibre, asbestos fibre, titanium dioxide fibres, glass fibre, lignin nanoparticles, nanographites, graphene, Oxides (eg. ZnO, alumina (Al₂O₃), Fe₃O₄, TiO₂), Fumed oxides (eg silica SiO₂), Nitrides (eg. BN), Silicates - natural & synthetic (eg. CaSiO3 - wollastonite; silic acid eg. magadiite), clays (natural & synthetic phyllosilicates eg. kaolinite, halloysite, talc, smectites (eg. montmorillonite (MT), bentonite, hectorite (laponite - synthetic hectorite), micas (eg. illite), sepiolites & palygorskite (eg. attapulgite, imogolite), organoclays (organically modified natural & synthetic phyllosilicates eg. modified montmorillonites (MMTs)), hydrated oxides (eg. brucite, gibbsite), layered double hydroxides (eg. Mg₆Al3.4(OH)18.8(CO₃)1.7H₂O), Zn₆Al₂(OH)16CO₃nH₂O), Oxifluorides, Carbonates, Sulphates (e.g. BaSO₄), Phosphates & Phosphonates (eg. hydroxyapatite; zirconium phosphates, alumino-phosphates), chlorides, metal nanoparticles: Ag, Au, Cu, or mixtures thereof.

9. The method according to claim 7, wherein the second reinforcing particle is chosen from organic reinforcing particles, preferably nanographite particles, graphene particles, lignin nanoparticles, carbon nanotube or mixtures thereof.

10. The method according to any one of the preceding claims, wherein the process solvent of the spinning solution is chosen from pure or aqueous solutions of cuprammonium solutions, amine oxides, ionic liquids, alkaline earth thiocyanates, organic halides, alkali metal hydroxides, urea - alkali metal hydroxides, cadoxen, cuprammonium hydroxide, copper (II) ethylene diamines, DMSO - tetraalkylammonium fluorides, acetone, dichloromethane and zinc chloride

11. The method according to according to any one of the preceding claims, wherein the cellulosic base material is dissolved in the process solvent and the first or mixture of first and second reinforcing particle is distributively dispersed in the process solvent to form the composite spinning solution by
a. first combining a first or mixture of first and second reinforcing particle with a process solvent such as to form a distributively dispersed suspension of the first or mixture of first and second reinforcing particle in a process solvent, and
b. subsequently adding a cellulosic base material to said suspension.

12. The method according according to according to any one of the preceding claims, wherein the process solvent is a salt of 1-(hydroxyalkyl)-3-methylimidazolium.

13. The method according to claim 11, wherein the distributively dispersed suspension of first and/or second reinforcing particle is in the form of a suspension or paste, preferably a suspension or paste in a salt of 1-(hydroxyalkyl)-3-methylimidazolium.

14. A reinforced cellulosic fibre or filament, obtainable by the method according to any one of the preceding claims, comprising a cellulosic base material and a first or mixture of first and second reinforcing particle, wherein the first or mixture of first and second reinforcing particle is distributively dispersed throughout the cellulosic base material.

15. The reinforced cellulosic fibre or filament according to claim 14, wherein the first reinforcing material is nanocellulose, nanocrystalline cellulose (CNC) or mixtures thereof, and the second reinforcing material is an inorganic or organic reinforcing particle other than the first reinforcing particle, or mixtures thereof..

16. The reinforced cellulosic fibre or filament according to claims 14 to 15, wherein it has a tenacity of from 15 to 200 cN/tex.

17. The reinforced cellulosic fibre or filament according to claims 14 to 16, comprising a weight ratio of cellulosic base material to first or mixture of first and second reinforcing particle of from 5:1 to 500:1.

18. The reinforced cellulosic fibre or filament according to claims 14 to 17, comprising of from 5 to 20 weight percent of a first or mixture of first and second reinforcing particle.

19. The use of nanocellulose, nanocrystalline cellulose (CNC) or mixtures thereof for reinforcing a fibre or filament comprising a cellulosic base material and a first or mixture of first and second reinforcing particle, wherein the first or mixture of first and second reinforcing particle is distributively dispersed throughout the cellulosic base material.

20. A spinning apparatus for producing a reinforced cellulosic filament comprising reinforcing particles, said apparatus comprising:
a. a first temperature-controlled mixing compartment for forming a spinning solution by dissolving a cellulosic base material and distributively dispersing a reinforcing particle in the process solvent,
b. a spinneret or spinning nozzle connected to the first temperature-controlled mixing compartment, for extruding the spinning solution into a temperature-controlled regeneration compartment,
c. a temperature-controlled regeneration compartment comprising a regeneration fluid for forming the reinforced cellulosic filament from the extruded spinning solution and
d. an optional orientation zone connected to or comprised in the temperature-controlled regeneration compartment, comprising a means for drawing the formed reinforced cellulosic filament by a factor of from 1 to 20, preferably from 5 to 15 and most preferably from 8 to 14.
